# EUROPEAN PATENT APPLICATION

(11) **EP 1 136 031 A1**
(43) Date of publication of application: **26.09.2001**
(21) Application number: 00937187.3
(22) Date of filing: 08.06.2000
(51) Int. Cl.: A47L 25/00

(54) **CLEANING WIPERS AND CLEANING MATERIAL**

(30) Priority: 18.06.1999 JP 17261299
(71) Applicant: Taiho Industries Co., Ltd., Minato-ku, Tokyo 108-0074 (JP)
(72) Inventor: OHARA, Sousaburou, Machida-shi, Tokyo 194-0002 (JP); MIYAGI, Akira, Fujisawa-shi, Kanagawa-ken 252-0816 (JP); KIJIMA, Tetsuo, Machida-shi, Tokyo 194-0212 (JP)
(74) Representative: Olgemöller, Luitgard, Dr.
(86) International application number: JP0003722
(87) International publication number: WO0078202

(57) **Abstract**

One purifier in accordance with the present invention comprises the first non-woven fabric made from at least one fiber of which material is selected from the group consisting of a polyester, an ethylene polymer, a propylene polymer, an acrylonitrile polymer and a nylon. Another purifier of the invention comprises the second non-woven fabric which is made from fibers including 30-90 weight % of a rayon and 10-70 weight % of a hydrophobic fiber of which material is selected from the group consisting of a polyester, an ethylene polymer, a propylene polymer and an acrylonitrile polymer. The cleaning material of the invention is characterized in that the second non-woven fabric is impregnated with a detergent which includes 5-30 weight % of an alcohol, 0.01-0.5 weight % of a surfactant and 64.7-94.99 weight % of water, and the amount of the detergent is 60-95 weight % based on the total weight of the cleaning material.

## Description

### Technical Field

The present invention relates to a wiping material, which will be termed "purifier" hereinafter, and a cleaning material. It relates, more particularly, to a purifier with which oily stains can easily be wiped away from a surface that is oil-stained, irrespective of whether the surface is wet or dry. It also relates to a cleaning material which is not sticky to the touch and which can smoothly be moved when the user wipes a thing with it. The surface after being wiped with the cleaning material is neither wet nor has a white splotchy appearance.

### Background Art

Cleaning materials made by impregnating a base material such as paper, gauze or non-woven fabric with cleaning agents are used in order to wipe dirt or stain away from glass and plastic faces. Various cleaning materials for various uses have been marketed.

Several prior art documents about these materials will be mentioned hereunder. The publication of examined Japanese Utility Model Application No. 60(1985)-161323 discloses a spectacle cleaner made through cutting a material impregnated with a detergent into pieces of a predetermined size and packing the cut pieces separately. The publication of unexamined Japanese Patent Application No. 2(1990)-103515 discloses a cleaning agent produced by impregnating sheet materials made from paper pulp with a lower alcohol, a volatility control agent and a detergent. The publication of unexamined Japanese Patent Application No. 2(1990)-148017 teaches a defogging agent prepared by impregnating sheet materials, made from paper pulp, with a surfactant and a volatile solvent that includes at least one compound selected from the group consisting of a lower alcohol, a hydrocarbon and low viscosity dimethyl-silicone.

However, when a surface made of a material, such as glass, whose characteristics are transparency and/or reflection, is wiped with a conventional cleaning material, the cleaning agent secreted by the cleaning material is left on the surface and the surface will remain wet. Thus, the user has to re-wipe the wet surface with a dry cloth such as a towel. If the wet surface is left unrewiped, the surface might have a white splotchy and therefore fogged appearance, which destroys the characteristic transparency and/or reflection.

Also, when a surface made of a material, such as glass, which is required to be transparent and/or reflective, is dirtied with oily stains and the surface is wet, wiping the surface with a dry material such as a dry towel or sponge, while removing the water, can hardly remove the oily stains. Even when dry, it is difficult to perfectly wipe the surface clean of oily stains with a dry material such as a dry towel or sponge.

### Summary of the Invention

The present invention is made to solve the aforementioned defects which such conventional wiping cloth as sponges or towels, or cleaning materials have. An objective of the invention is to provide a purifier with which oily stains can easily be wiped away from a surface, such as a glass face, that has been oil-stained, irrespective of whether the surface is wet or dry. Another objective of the invention is to provide a cleaning material, the use of which in wiping a surface such as a glass face results in a clean surface that neither is wet nor reveals white splotchy appearance.

Studying causes for the conventional materials' defects revealed that wiping a dry surface such as a dry glass face with a non-woven fabric made of the combination of a specific fiber selected from hydrophilic fibers with another specific fiber selected from hydrophobic fibers, can easily remove oily stains from the dry surface even if the non-woven fabric is not impregnated with a detergent. This finding led to one embodiment of the present invention.

Also it was found out that wiping a wet surface such as a wet glass face with a non-woven fabric made only of a specific fiber selected from hydrophobic fibers can easily remove oil stains from the wet surface even if the non-woven fabric is not impregnated with a detergent, which led to another embodiment of this invention.

Furthermore, studying causes for the conventional materials' defects gave us the following pieces of knowledge:
(1) The wetness of a surface such as a glass face after wiping the surface with a conventional cleaning material impregnated with a detergent is due to the overimpregnation of the detergent for the total amount of fibers in the non-woven fabric. The fibers in the non-woven fabric will occasionally referred as "base materials" hereinafter.
(2) The white splotchy appearance is due to (a) the properties of the base material itself, (b) the composition of the detergent, and (c) the overimpregnation of the detergent for the amount of the base material.

Further studies revealed the following details of the causes. With respect to cause (a), the base material contains a trace of constituents that dissolve in water or alcohols and the constituents result in the white splotchy appearance. Concerning cause (b), comparing the alcohols with water as ingredients of the detergent showed that the former tends to dissolve the constituents more than the latter. Therefore, reducing the amount of the alcohols in the detergent will decrease the white splotches. With reference to cause (c), when a surface such as a glass face is wiped with a conventional cleaning material of which the base material is overimpregnated with a detergent, the detergent that has incorporated the staining oils is not perfectly absorbed into the base material and is left on the surface, which results in the wetness of the surface. After the surface is dried, the staining oils that were taken into the detergent, which remained on the surface, appear on the surface as white splotches.

### Disclosure of the Invention

The present invention was made based on the aforementioned. Specifically, this invention provides a purifier comprising a non-woven fabric which is made from at least one fiber of which material is selected from the group consisting of a polyester, an ethylene polymer, a propylene polymer, an acrylonitrile polymer and a nylon.

The present invention further provides a purifier which comprises a non-woven fabric which is made from fibers including 30-90 weight % of a rayon fiber and 10-70 weight % of at least one hydrophobic fiber of which material is selected from the group consisting of a polyester, a propylene polymer and an acrylonitrile polymer.

This invention still further provides a cleaning material which comprises a non-woven fabric which is made from fibers including 30-90 weight % of a rayon fiber and 10-70 weight % of at least one hydrophobic fiber of which material is selected from the group consisting of a polyester, a propylene polymer and an acrylonitrile polymer, wherein the non-woven fabric is impregnated with a detergent which includes 5-30 weight % of an alcohol, 0.01-0.5 weight % of a surfactant and 64.7-94.99 weight % of water, and the amount of the detergent is 60-95 weight % based on the total weight of the cleaning material.

### Best Mode for Carrying-out the Invention

A purifier in accordance with the invention comprises a non-woven fabric which is made from at least one fiber of which material is selected from the group consisting of a polyester, an ethylene polymer, a propylene polymer, an acrylonitrile polymer and a nylon. In this description, this non-woven fabric is termed "the first non-woven fabric". One characteristic of the first non-woven fabric is that it is made from the specific hydrophobic fibers and that is not comprised of any hydrophilic fibers.

The polyester fiber includes fibers made of conventional polyesters produced by conventional methods. The ethylene polymer fiber includes fibers spun from well-known ethylene polymers. The propylene polymer fiber is obtained by spinning fibers made of well-known propylene polymers. For the acrylonitrile polymer fiber can be used fibers spun from conventional acrylonitrile polymers. The nylon fiber includes well-known nylon fibers such as nylon 66 and/or nylon 610.

For the first non-woven fabric, the value of METSUKE, which is the weight of the fibers for one square meter of the non-woven fabric, preferably does not exceed 100 g/m². In particular, the value should be within the range of 30 to 80 g/m². With the value of METSUKE so described, it brings a good operability when the user wipes the dirt away with the purifier, and especially reduces the transference of the dirt from the purifier to the user's hand. Also, the thickness of the fibers for the non-woven fabric is preferably 2 dtex or less, more preferably, from 0.6 to 1.7 dtex. The unit "dtex" is the abbreviation of "deci-tex" and "1 dtex" means the thickness of a fiber which has a weight of 1 g and a length of 10,000 m. When the fibers satisfy the thickness requirement, the staining oils can efficiently be wiped off with a purifier made of the non-woven fabric which comprises the fibers and, particularly, the wiped oils can effectively be taken into the fibers.

For the first non-woven fabric can be used non-woven fabrics produced by dry methods, wet methods and direct methods.

With the purifier comprising this first non-woven fabric, the user can remove oil stains from a surface such as a glass face only by wiping the surface, even if the surface is dry and the non-woven fabric is not impregnated with a detergent.

Another purifier in accordance with the invention comprises a non-woven fabric which is made from fibers including 30-90 weight % of a rayon fiber and 10-70 weight % of at least one hydrophobic fiber of which material is selected from the group consisting of a polyester, an ethylene polymer, apropylene polymer and an acrylonitrile polymer. This non-woven fabric is termed "the second non-woven fabric".

The polyester fiber, ethylene polymer fiber, propylene polymer fiber and acrylonitrile polymer fiber useful for the second non-woven fabric are the same as those for the first non-woven fabric explained above. For the rayon fiber can be used well-known viscose rayons.

For the second non-woven fabric, the value of METSUKE of the fibers preferably does not exceed 100 g/m². In particular, the value should be within the range of from 30 to 80 g/m². When the value of METSUKE is so described, it brings a good operability when the user wipes the dirt away with the purifier. and especially reduces the transference of the dirt from the purifier to the user's hand. Also, the thickness of the fibers for the non-woven fabric is preferably 2 dtex or less, more preferably, from 0.6 to 1.7 dtex. When the fibers satisfy the thickness requirement, the staining oils can efficiently be wiped off with a purifier made of the non-woven fabric which comprises the fibers and, particularly, the wiped oils can effectively be taken into the fibers.

For the second non-woven fabric can be used non-woven fabrics produced by dry methods, wet methods and direct methods.

With the purifier, which means a wiping cloth, comprising this second non-woven fabric, the user can remove oil stains from a surface such as a glass face only by wiping the surface, even if the surface is wet and the non-woven fabric is not impregnated with a detergent. The oily stains include stains that contain oils and stick to a surface such as a glass face. The examples are oily vapors such as those from oils for *tempura*, which is Japanese deep-oil fried food, nicotine, tar, or other oily dirt in the atmosphere such as oily soot and smoke.

For both of the first and second non-woven fabrics can be suitably used non-woven fabrics of which surfaces are processed into smooth and plane ones, since non-woven fibers with such surfaces are superior in cleaning properties. From the viewpoints of superiority in taking the wiped staining oils into the fibers, non-woven fabrics with mesh surfaces are superior.

By impregnating the second non-woven fabric with a specific detergent, the cleaning effect on a surface such as a glass face can be improved.

In order to impregnate the second non-woven fabric with a detergent, the second non-woven fabric needs to have the properties of retaining the detergent inside itself to some extent and of secreting the detergent gradually. For these properties it is important that the non-woven fabric has a balanced combination of the hydrophilic qualities and the hydrophobic qualities. In order to provide a non-woven fabric with a proper hydrophilic nature, it is essential to use, as a material for the non-woven fabric, rayon that has a hydrophilic nature, while it is indispensable to use hydrophobic fibers to give the non-woven fabric the property of secreting the detergent.

Rayon is appropriate to the material for the hydrophilic fiber also for the reason that the amount of constituents which dissolve in water or alcohols is small. For the hydrophobic fiber is appropriate at least one fiber selected from the group consisting of a polyester, an ethylene polymer, a propylene polymer and an acrylonitrile polymer. Nylon is not appropriate because the amount of constituents that dissolve in water or alcohols is large. The hydrophobic fibers such as a polyester fiber, an ethylene polymer fiber, a propylene polymer fiber and an acrylonitrile polymer fiber may be used singly, or two or more of them may be used in combination.

The amount of the rayon fiber in the non-woven fabric is preferably from 30 to 90 weight %, more preferably, from 50 to 80 weight %.

If the amount of the rayon fiber is less than 30 weight %, the ability of retaining a detergent in the non-woven fabric is small. Consequently, a larger amount of the detergent oozes in the early stages of wiping, and the non-woven fabric becomes short of the detergent in the later stages. This means that the user cannot purify or clean an intended area of the surface effectively with the cleaning material comprising the non-woven fabric.

On the other hand, if the amount of the rayon fiber exceeds 90 weight %, the ability of retaining a detergent is sufficient and the secretion of the detergent can be controlled well. However, in the last stages of wiping, the non-woven fabric retains too much detergent, which leads to a waste of the detergent. Besides, the non-woven fabric loses a smooth glide over the surface and buckles, which results in difficulty in the cleaning operation itself.

The amount of the hydrophobic fiber of which material is at least one selected from the group consisting of a polyester, an ethylene polymer, a propylene polymer and an acrylonitrile polymer is preferably from 10 to 70 weight %, more preferably, from 20 to 50 weight %. In addition, the non-woven fabric used for this invention may further include hydrophobic fibers that have a small amount of constituents dissoluble in water, other than the fibers of a polyester, an ethylene polymer, a propylene polymer or an acrylonitrile polymer, as long as it does not adversely affect the present invention.

As explained above, the METSUKE value of a non-woven fabric means the weight of the fibers for one square meter of the non-woven fabric. The METSUKE value of the non-woven fabric used for the cleaning material in accordance with the invention is 50 g/m² or more, preferably from 60 to 90 g/m². When the METSUKE value is so described, the cleaning material could feel substantial when the user takes it in his/her hand, and it can be impregnated with sufficient amount of the detergent, which leads to cleaning of the surface having a larger area.

The detergent applied to the second non-woven fabric comprises at least an alcohol, a surfactant and water.

The alcohol is effective in removing oily stains and making the detergent remaining on the wiped surface dry up quickly. However, as described above, an alcohol has the defect of dissolving a large amount of the dissoluble constituents of the non-woven fabric. In order to maintain the two former effects as well as to, to a certain extent, restrict the latter defect, the amount of the alcohol in the detergent is preferably from 5 to 30 weight %. In particular, for reducing the dissolution of the constituents, the amount should be from 5 to 20 weight %.

The alcohol includes monovalent alcohols such as methanol, ethanol, n-propanol, 2-propanol, n-butanol, 2-methylpropanol, 2-butanol, 2-methyl-2-propanol, n-pentanol, 3-methylbutanol, 2-methyl-2-butanol, 2,2-dimethylbutanol or n-hexanol; and polyvalent alcohols such as 1,2-ethanediol, 1,2-propanediol, 1,3-propanediol, 1,4-butanediol, 2,3-dimethyl-butanediol or 1,2,3-propanetriol. Among them monovalent lower alcohols are preferable. In particular, monovalent lower alcohols having 2 or 3 carbon atoms, such as ethanol, n-propanol or 2-propanol, are more preferable.

The surfactant can lower the interfacial tension of the detergent and improve the miscibility thereof with the stains. However, if the detergent contains a larger amount of the surfactant, the detergent sometimes remains on the cleaned surface. In order to maintain the miscibility and to prevent the detergent from remaining on the wiped surface, the amount of the surfactant in the detergent is preferably from 0.01 to 0.5 weight %, more preferably from 0.05 to 0.3 weight %.

For the surfactant of the invention can be used any surfactant that is dissoluble in the detergent, for example, lower monovalent alcohols having 1-5 carbon atoms, particularly, those having 2 or 3 carbon atoms. The surfactant includes anionic surfactants, cationic surfactants, amphoteric surfactants, nonionic surfactants, etc.

The anionic surfactants include salts of organic acids such as carboxylates or sulfonates, sulfates, and phosphates.

Examples of the carboxylates are sodium laurate, potassium laurate, sodium myristate, sodium palmitate, sodium stearate, sodium oleate, potassium oleate and ether carboxylates.

Examples of the sulfonates are higher alkyl sulfonates, á-olefin sulfonates, sulfonates of higher aliphatic acid esters, dialkyl sulfosuccinates, sulfonates of higher aliphatic acid amides, alkylaryl sulfonates such as alkylbenzenesulfonates, alkylnaphthalenesulfonates, and formalin condensates of alkylaryl sulfonic acids.

Examples of the sulfates are sulfates of higher alcohols and higher secondary alcohols, alkyl ether sulfates, alkylaryl ether sulfates, alkyl sulfates, sulfates of higher aliphatic acid esters, sulfates of higher aliphatic acid alkydolamides, and sulfated oils.

Examples of the phosphates are sodium didecyl phosphate, sodium oxyethylene laurylether phosphate, sodium polyoxy-ethylene cetylether phosphates, sodium polyoxyethylene oleylether phosphates, and sodium polyoxyethylene alkylphenyl ether phosphates.

The cationic surfactants include amine salts, quaternary ammonium salts, etc.

Examples of the amine salts are alkylamine salts, polyamines, derivatives of aminoalcohol fatty acids.

Examples of the quaternary ammonium salts are alkyl quaternary ammonium salts, and quaternary ammonium salts having hydroxyl groups, ether bonds and amide bonds.

The amphoteric surfactants include N-lauryl β-alanine, N-stearyl β-alanine, N,N,N-trimethylamino-propionic acid, N-hydroxylethyl N,N-dimethylaminopropionic acid, N-methyl N,N-dihydroxyethylaminopropionic acid, N,N,N-trihydroxy-ethylaminopropionic acid, N-lauryl N,N-dimethylamino-propionic acid, N-myristyl N,N-dimethyl-aminopropionic acid, N-palmityl N,N-dimethylaminopropionic acid, N-stearyl N,N-dimethylaminopropionic acid, N-hexyl N,N-dimethylaminoacetic acid, N-octyl N,N-dimetylaminoacetic acid, N-decyl N,N-dimethylaminoacetic acid, N-undecyl N,N-dimethylaminoacetic acid, N-lauryl N,N-dimethylaminoacetic acid, N-myristyl N,N-dimethylaminoacetic acid, N-palmityl N,N-methylamino-acetic acid, N-stearyl N,N-dimethylamino-acetic acid, 1-pyridium betain, 1-α-picolinium betain, etc.

The nonionic surfactants include nonionic surfactants of an ether type, ether-ester type, ester type and block polymer type and a nitrogen-containing nonionic surfactant.

Examples of the ether-type nonionic surfactant are polyoxyethylene-alkyl or -alkylaryl ethers such as polyoxyethylene-aliphatic alcohol ethers, poyoxyethylene-alkylaryl ethers and polyoxyethylenelanolin alcohol ethers; surfactants of a single-chain polyoxyethylene ether type; and ethylene oxide derivatives of an alkylphenol-formalin condensates.

Examples of the ether-ester type nonionic surfactant are ester bond-containing polyoxyethylene ethers such as polyoxyethylenesorbitan-fatty esters, polyoxyethylene-glyceryl-mono-fatty esters, polyoxyethylene-propylene-glycol-fatty esters and polyoxyethylene-sorbitol-fatty esters; and polyoxyethylene derivatives of natural fats, oils and waxes.

Examples of the ester type nonionic surfactant are polyoxy-ethylene-fatty esters and polyalcohol esters.

Examples of the block polymer type nonionic surfactant are surfactants of a Pluronic type and of a Tetronic type and alkyl group-containing block polymers.

Examples of the nitrogen-containing nonionic surfactant are polyoxyethylene-fatty amides, alkylol amides and polyoxyalkyl amines.

Of these surfactants are preferred the cationic surfactants and the nonionic surfactants. Of the cationic surfactants are especially preferred a trialkanolamine alkylsulfate such as triethanolamine laurylsulfate, which is a salt made from an alkylsulfric acid having 8-16 carbon atoms and a trialkanolamine of which substituents are alcohols each having 1-5 carbon atoms; and an alkanolamine polyoxy-ethylenealkylethersulfate which is a salt made from a polyoxyethylene(n=1-5)alkylethersulfric acid and an alkanolamine. Of the nonionic surfactants are a polyoxy-ethylenealkyl ether and a polyoxyethylene fatty ester which is an ester made from an alkylcarboxylic acid having 10-20 carbon atoms and a polyethylene glycol.

The amount of water in the detergent is from 64.7 to 94.99 weight %. The amount of water is so determined that the total amount of the alcohol, water and the surfactant is 100 weight %.

If desired, the detergent may include antiseptics and perfumes.

The antiseptics include alkyldiaminoethylglycine hydrochlorides, p-hydroxybenzoates (parabens) such as methyl p-hydroxybenzoate (methylparaben), ethyl p-hydroxybenzoate (ethylparaben) and butyl p-hydroxybenzoate (butylparaben), sodium salicylate, sodium benzoate, etc.

The amount of the detergent to be applied to the non-woven fabric has a close relationship with the wetness and the appearance of white splotches on the wiped surface. In this context the surface means a surface to be cleaned or needing to be cleaned. The amount is preferably from 60 to 95 weight %, more preferably from 70 to 90 weight %. If the amount is less than 60 weight %, the amount of the detergent oozing from the cleaning material is reduced, which makes the cleaning effect poorer and the area that can be cleaned, smaller. On the other hand, if the amount of the detergent exceeds 95 weight %, the user feels the cleaning material sticky when s/he takes it in her/his hand. Also, since a larger amount of the detergent oozes from the cleaning material, the detergent remains on the cleaned surface for a long time and leaves the surface wet, which requires wiping with a dry material such as a towel. If the surface is naturally dried, white splotches might appear thereon.

The cleaning material in accordance with the invention may be produced as will be described below.

The non-woven fabric can be produced by known methods using the rayon and the other materials as explained above so as to satisfy the requirements such as the composition and the METSUKE value. The size of the non-woven fabric should be from 170 mm x 250 mm to 300 mm x 400 mm from the viewpoint of operability. The first and second non-woven fabrics should also have the same size as the non-woven fabric for the cleaning material, when they are used as purifier.

The detergent can be produced by mixing the given amounts of the alcohol, the surfactant, water and, if necessary, the antiseptics until the mixture has a homogeneous composition.

The cleaning material can be produced by uniformly impregnating the non-woven fabric with the detergent. The impregnation may be carried out by, for example, applying an amount of the detergent, which amount satisfies the requirement, onto a predetermined amount of the non-woven fabric through dispensing means such as a nozzle and allowing the non-woven fabric stand until the detergent spreads uniformly all over the fabric, immersing the non-woven fabric in the detergent, and coating the non-woven fabric with the detergent using a tool such as a roller.

In order to prevent the cleaning material from drying, it is desirable to seal off the cleaning material into a packing bag, one or several pieces per bag. When several pieces of the cleaning material are packed together, the bag should have an opening that can tightly be fastened and through which the cleaning material can be taken out when necessary. Packing bags having such fasteners can keep the cleaning material from drying and they are also convenient. The packing bags are preferably made of laminated films, such as a PET/aluminum foil/PE film where the outside is PET and the inside is PE. Further, the PET layer should have a thickness of 12-16 µm, the aluminum foil layer 7-9 µm, and the PE 40 µm. By heating the laminated film to melt and glue up the PE layers together can be made a tightly sealed bag.

How to use the cleaning material will be explained in the following. Take the cleaning material in your hand and wipe a surface to which staining oils adhere, such as a glass face or a plastic face, from once to several times. Since the surfactant included in the detergent that wells up from the cleaning material encloses the oils and removes them into the cleaning material, the surface is cleaned. Due to the alcohol included in the detergent, the wiped face is dried soon. Therefore re-wiping for drying the face is not required.

The surface that can be wiped with the material of this invention includes, for example, glass faces, plastic faces, metal faces, wooden faces, ceramic faces, and coated faces thereof. In particular, this cleaning material can suitably used for a glass face that requires non-fogginess and gloss, and coated bodies of vehicles.

### (Working Example 1)

A non-woven fabric produced by Omi Kenshi Co., Ltd. was used in this example. This non-woven fabric was made from 70 wt% of a rayon and 30 wt% of a polyester wherein the METSUKE value was 50 g/m². This fabric was cut into pieces each having a size of 200 mm x 300 mm. 8.0 wt% of ethanol, 0.05 wt% of a surfactant and 91.95 wt% of water were mixed to make a detergent. The surfactant was Nikkol (a.trade mark) TEALS produced by Nikko Chemicals Co., Ltd., wherein "Nikkol" is a phonetic translation of the corresponding Japanese. By impregnating the non-woven fabric with this detergent was made a cleaning material of this invention. The amount of the detergent applied was 80 wt% to the weight of the non-woven fabric.

The following tests were carried out with this cleaning material.

### 1. Wetness of the cleaning material before use

Wetness of the cleaning material before use was examined by the sense of touch. The result is shown in Table 3. The followings were the evaluation standards.
- Good:: The cleaning material was not sticky to the touch.
- Fair:: The cleaning material was somewhat dry to the touch.
- Failure:: The cleaning material was sticky to the touch and the detergent was secreted by firmly grasping the material by the hand.

### 2. Cleaning ability and operability of the cleaning material

Automobiles to which dirt and stains had adhered while parked were used for the experiments. The automobiles were Primera (the model produced in 1998 by Nissan Co., Ltd.), Sunny (the model produced in 1994 by Nissan), Crown (the model produced in 1997 by Toyota), Corolla (the model produced in 1995 by Toyota), Corona (the model produced in 1995 by Toyota), etc. The windshield of each of the automobiles was divided into two parts, i.e. the left part and the right part. First, the right part was wiped down and up once with the cleaning material. Then, the left part was wiped similarly. The operability during the wiping and the cleaning ability by this wiping were examined. The operability was judged based on the sliding smoothness of the cleaning material during the operation. The cleaning ability was evaluated by observing the states of the parts just after the operation, especially by observing whether any dirt remained on the wiped parts or not, and whether the wiped parts were wet or not.

The results are shown in Table 3. The followings were the standards for evaluating the cleaning ability.
- Good:: The sliding of the cleaning material was smooth. The wiped parts were clean and not wet.
- Fair:: The sliding of the cleaning material was smooth. However, the wiped parts were wet.
- Failure:: The sliding of the cleaning material was not smooth. The wiped parts were wet.

### 3. Existence or non-existence of white splotches

After the examination of cleaning ability and operability of the cleaning material was observed whether white splotches appeared or not on the wiped parts.

The results are shown in Table 3. The followings were the evaluation standards.
- Good:: There were few white splotches on the wiped parts.
- Fair:: There were a few white splotches on the wiped parts.
- Failure:: There were striking white splotches on the wiped parts.

### (Working Examples 2-7)

The steps of Working Example 1 were repeated except that the materials, their compositions and the METSUKE values of the non-woven fabrics, the components and their compositions of the detergents, and the impregnation amounts were changed as shown in Table 1.

The results are shown in Table 3.

### (Comparative Examples 1-4)

The steps of Working Example 2 were repeated except that the materials, their compositions and the METSUKE values of the non-woven fabrics, the components and their compositions of the detergents, and the impregnation amounts were changed as shown in Table 2.

The results are shown in Table 3.

**Table 1**

| Compositions in Working Examples | | | | | | |
|---|---|---|---|---|---|---|
| | Materials & compositions of the non-woven fabrics (wt%) | | METSUKE Values (g/m²) | Components & compositions the detergent (wt%) | | Amount of the detergent (wt%) |
| Working Example 1 | rayon | 70 | 50 | ethanol | 8.0 | 80 |
| | polyester | 30 | | TEALS | 0.05 | |
| | | | | water | 91.95 | |
| Working Example 2 | rayon | 70 | 80 | 2-propanol | 12 | 75 |
| | polyester | 30 | | TEALS | 0.1 | |
| | | | | water | 91.95 | |
| Working Example 3 | rayon | 80 | 70 | 2-propanol | 10 | 90 |
| | polyester | 10 | | NES | 0.08 | |
| | poly-propylene | 10 | | water | 87.9 | |
| Working Example 4 | rayon | 35 | 60 | n-propanol | 15 | 65 |
| | polyacrilonitrile | 65 | | NES | 0.08 | |
| | | | | water | 84.92 | |
| Working Example 5 | rayon | 70 | 55 | ethanol | 10 | 80 |
| | polyacrilonitrile | 30 | | BT | 0.2 | |
| | polyester | 10 | | water 89.8 | | |
| Working Example 6 | rayon | 50 | 70 | 2-propanol | 10 | 70 |
| | polyester | 50 | | BT | 0.2 | |
| | | | | water | 89.8 | |
| Working Example 7 | rayon | 50 | 60 | n-propanol | 8 | 75 |
| | polyester | 30 | | MYD | 0.1 | |
| | polypropylene | 20 | | water | 91.9 | |
| Notes: * TEALS means Nikkol TEALS, which is triethanolamine laurylsulfates produced by Nikko Chemicals Co., Ltd. * NES means Nikkol NES303-37, which is a triethanolamine POE(3) alkylether sulfate produced by Nikko Chemicals Co., Ltd. * BT means Nikkol BT-12, which is a POE(12) secondary alkyl ether produced by Nikko Chemicals Co., Ltd. * MYD means Nikkol MYD-10, which is a polyethylene glycol monooleate produced by Nikko Chemicals Co., Ltd. | | | | | | |

**Table 2**

| Compositions in Comparative Examples | | | | | | |
|---|---|---|---|---|---|---|
| | Materials & compositions of the non-woven fabrics (wt%) | | METSUKE Values (g/m²) | Components & compositions the detergent (wt%) | | Amount of the detergent (wt%) |
| Comp. Example 1 | nylon /rayon | 70 | 80 | ethanol | 10 | 80 |
| | polyester | 30 | | TEALS | 0.1 | |
| | | | | water | 89.9 | |
| Comp. Example 2 | nylon | 50 | 75 | ethanol | 10 | 50 |
| | polyester | 50 | | TEALS | 0.1 | |
| | | | | water | 89.1 | |
| Comp. Example 3 | rayon | 50 | 70 | 2-propanol | 5 | 200 |
| | polyester | 50 | | BT | 0.08 | |
| | | | | water | 94.92 | |
| Comp. Example 4 | rayon | 50 | 45 | ethanol | 40 | 80 |
| | polyester | 50 | | BT | 0.1 | |
| | | | | water | 59.9 | |
| Notes: * TEALS means Nikkol TEALS, which is triethanolamine laurylsulfates produced by Nikko Chemicals Co., Ltd. * NES means Nikkol NES303-37, which is a triethanolamine POE(3) alkylether sulfate produced by Nikko Chemicals Co., Ltd. * BT means Nikkol BT-12, which is a POE(12) secondary alkyl ether produced by Nikko Chemicals Co., Ltd. * MYD means Nikkol MYD-10, which is a polyethylene glycol monooleate produced by Nikko Chemicals Co., Ltd. | | | | | | |

**Table 3**

| Results of the Evaluations | | | |
|---|---|---|---|
| | Wetness | Cleaning ability & operability | Existence of white splotches |
| Working Ex. 1 | good | good | good |
| Working Ex. 2 | good | good | good |
| Working Ex. 3 | good | good | good |
| Working Ex. 4 | good | good | good |
| Working Ex. 5 | good | good | good |
| Working Ex. 6 | good | good | good |
| Working Ex. 7 | good | good | good |
| Comp. Ex. 1 | good | good | failure |
| Comp. Ex. 2 | fair | failure | failure |
| Comp. Ex. 3 | failure | fair | failure |
| Comp. Ex. 4 | good | good | failure |

### (Working Examples 8-18 and Comparative Example 5)

From the fibers shown in Table 4 were made non-woven fabrics having a size of 100 cm x 100 cm, a thickness of 0.1-0.3 cm and a METSUKE value shown in Table 4. These non-woven fabrics were used as purifiers. A proper amount of an artificial dirt, which is the comparative pollutant in accordance with JIS K 2398-1989, was uniformly applied onto a 50 cm x 50 cm glass face and dried at a room temperature. The obtained was used for the test piece. The purifier was folded in two and the polluted face of the test piece was wiped three times down and up with the folded purifier. The wiped face was observed with an automatic haze meter produced by Tokyo Denshoku Gi jutsu Center Co., Ltd. in order to determine the haze of the wiped face. A wiped face having a smaller value of the haze was considered to be cleaner.

**Table 4**

| | Fiber materials (wt%)* | METSUKE Value (g/m²) | Thickness of the fiber (dtex) | Surface state of the non-woven material | Cleaning ability (haze) |
|---|---|---|---|---|---|
| Working Ex. 8 | nylon(50)/ PE(50) | 80 | 1.7 | plane | 0.9 |
| Working Ex. 9 | nylon(50)/ PE(50) | 70 | 1.7 | plane | 0.8 |
| Working Ex. 10 | nylon(50)/ PE(50) | 50 | 1.7 | plane | 0.8 |
| Working Ex. 11 | nylon(50)/ polyester(50) | 70 | 1.7 | plane | 0.8 |
| Working Ex. 12 | nylon(50)/ polyester(50) | 70 | 0.8 | plane | 0.6 |
| Working Ex. 13 | PP(50)/ polyester(50) | 70 | 1.7 | plane | 1.2 |
| Working Ex. 14 | PP(50)/ polyester(50) | 50 | 0.8 | plane | 0.8 |
| Working Ex. 15 | polyacrylo-n itrile(90)/p olyester(10) | 50 | 1.7 | plane | 0.7 |
| Working Ex. 16 | polyacrylo-n itrile(90)/p olyester(10) | 35 | 1.7 | plane | 0.8 |
| Working Ex. 17 | polyacrylo-n itrile(70)/p olyester(30) | 50 | 1.7 | plane | 1.1 |
| Working Ex. 18 | polyacrylo-n itrile(70)/p olyester(30) | 40 | 0.8 | plane | 0.7 |
| Comp. | cotton(100) | | 80 | mesh | 3.1 |
| Ex. 5 | | | cotton count | | |

| | | | | | |
|---|---|---|---|---|---|
| * The contents of the respective materials in terms of weight % are shown in the parentheses. | | | | | |

### (Working Examples 19-29 and Comparative Example 6)

From the fibers shown in Table 5 were made non-woven fabrics having a size of 100 cm x 100 cm, a thickness of 0.1-0.3 cm and a METSUKE value shown in Table 5. These non-woven fabrics were used as purifiers. A proper amount of an artificial dirt, which was the same as that used in Working Examples 18-28 and Comparative Example 5, was uniformly applied onto a 50 cm x 50 cm glass face and dried at a room temperature. The obtained was used for the test piece.

Then, the test piece was wetted for the examination. The purifier was folded in two and the wet polluted face of the test piece was wiped three times down and up with the folded purifier. The wiped face was observed with an automatic haze meter produced by Tokyo Denshoku Gijutsu Center Co., Ltd. in order to determine the haze of the wiped face. A wiped face having a smaller value of the haze was considered to be cleaner.

**Table 5**

| | Fiber materials (wt%)* | METSUKE Value (g/m²) | Thickness of the fiber (dtex) | Surface state of the non-woven material | Cleaning ability (haze) |
|---|---|---|---|---|---|
| Working Ex. 19 | nylon(50)/ PE(50) | 90 | 0.8 | mesh | 2.2 |
| Working Ex. 20 | nylon(50)/ PE(50) | 50 | 0.8 | plane | 0.9 |
| Working Ex. 21 | nylon(50)/ PE(50) | 50 | 0.8 | mesh | 2.8 |
| Working Ex. 22 | nylon(50)/ polyester(50) | 70 | 0.8 | plane | 0.8 |
| Working Ex. 23 | nylon(50)/ polyester(50) | 70 | 0.8 | mesh | 3.0 |
| Working Ex. 24 | PP(50)/ polyester(50) | 70 | 0.6 | plane | 1.2 |
| Working Ex. 25 | PP(50)/ polyester(50) | 70 | 0.6 | mesh | 2.6 |
| Working Ex. 26 | polyacrylo-n itrile(90)/p olyester(10) | 35 | 0.8 | plane | 0.6 |
| Working Ex. 27 | polyacrylo-n itrile(90)/p olyester(10) | 35 | 0.8 | mesh | 2.7 |
| Working Ex. 28 | polyacrylo-n itrile(70)/p olyester(30) | 40 | 1.7 | plane | 0.9 |
| Working Ex. 29 | polyacrylo-n itrile(70)/p olyester(30) | 40 | 1.7 | mesh | 2.5 |
| Comp. Ex. 6 | cotton(100) | | 100 cotton count | Mesh | 3.8 |

| | | | | | |
|---|---|---|---|---|---|
| * The contents of the respective materials in terms of weight % are shown in the parentheses. | | | | | |

### Industrial Applicability

Using that purifier in accordance with the present invention which is made by the special combination of the specific fibers, oily stains can easily be wiped away from a surface, such as a glass face, that is oil-stained, irrespective of whether the surface is wet or dry.

The cleaning material of this invention is not sticky to the touch and does not give the user uncomfortable feelings. In other words, the present invention provides cleaning materials of a semi-wet type.

Also, this cleaning material smoothly slides on the surface and does not buckle due to the friction with the surface, which leads to an excellent operability.

The surface after being wiped with the cleaning material dries up immediately and the detergent does not remain on the wiped surface. The user is not required to re-wipe the surface again with a dry material, such as a dry cloth, in order to remove the wetness.

In addition, the surface after being wiped with the cleaning material does not show a white splotchy appearance. So, the wiped surface is beautiful.

## Claims

1. A purifier comprising a non-woven fabric which is made from fibers including 30-90 weight % of a rayon and 10-70 weight % of a hydrophobic fiber of which material is selected from the group consisting of a polyester, a propylene polymer and an acrylonitrile polymer.

2. A purifier which comprising a non-woven fabric made from at least one fiber of which material is selected from the group consisting of a polyester, an ethylene polymer, a propylene polymer, an acrylonitrile polymer and a nylon.

3. A purifier according to claim 1 or 2, wherein said non-woven fabric has a METSUKE value of not more than 100 g/m².

4. A purifier according to any one of claims 1-3, wherein said fiber or fibers each have a thickness of not more than 2 dtex.

5. A cleaning material which comprising a non-woven fabric which is made from fibers including 30-90 weight % of a rayon fiber and 10-70 weight % of at least one hydrophobic fiber of which material is selected from the group consisting of a polyester, a propylene polymer and an acrylonitrile polymer, wherein the non-woven fabric is impregnated with a detergent which includes 5-30 weight % of an alcohol, 0.01-0.5 weight % of a surfactant and 64.7-94.99 weight % of water, and the amount of the detergent is 60-95 weight % based on the total weight of the cleaning material.

6. A cleaning material according to claim 5, wherein the non-woven fabric has a METSUKE value of 50-90 g/m².

7. A cleaning material according to claim 5 or 6, wherein said fibers each have a thickness of not more than 2 dtex.

8. A cleaning material according to any one of claims 5-7, wherein the alcohol is a lower monovalent alcohol having 1-5 carbon atoms.

9. A cleaning material according to any one of claims 5-7, wherein the alcohol is a lower monovalent alcohol having 2-3 carbon atoms.

10. A cleaning material according to any one of claims 5-9, wherein the surfactant is an anionic surfactant.

11. A cleaning material according to any one of claims 5-9, wherein the surfactant is a cationic surfactant.

12. A cleaning material according to any one of claims 5-9, wherein the surfactant is an amphoteric surfactant.

13. A cleaning material according to any one of claims 5-9, wherein the surfactant is a nonionic surfactant.
